# EUROPÄISCHE PATENTSCHRIFT

(11) **EP 1 818 532 B1**
(45) Veröffentlichungstag und Bekanntmachung des Hinweises auf die Patenterteilung: **29.06.2011**
(21) Anmeldenummer: 07000309.0
(22) Anmeldetag: 09.01.2007
(51) Int. Cl.: F02M 25/07, F02B 37/10

(54) **Anordnung zur Abgasrückführung**
System for exhaust gas recirculation
Dispositif destiné à la réinjection de gaz d'échappement

(30) Priorität: 10.02.2006 DE 102006006147
(43) Veröffentlichungstag der Anmeldung: 15.08.2007
(73) Patentinhaber: MAN Truck & Bus AG, 80995 München (DE)
(72) Erfinder: Sontheimer, Werner, 90441 Nürnberg (DE); Hofmann, Klaus, 90596 Schwanstetten (DE); Keitel, Rolf, 97990 Weikersheim (DE); Greisiger, Guido, 91301 Forchheim (DE)

(56) Entgegenhaltungen:
- EP-A1- 1 205 655
- JP-A- 4 017 765
- JP-A- 8 240 155
- JP-A- 2000 064 912
- JP-A- 2004 011 562
- US-A1- 2003 093 994

## Beschreibung

Gegenstand der Erfindung ist eine Anordnung zur Abgasrückführung bei mittels Abgasturbolader aufgeladenen Brennkraftmaschinen gemäß dem Gattungsbegriff des Patentanspruches 1.

Bei Brennkraftmaschinen, insbesondere selbstzündenden Brennkraftmaschinen ist es bekannt, zur Leistungssteigerung Turbolader-Anordnungen vorzusehen, um den Brennräumen die Verbrennungsluft verdichtet zuzuführen und so eine bessere Zylinderfüllung zu erreichen.

Weiter ist es bei Brennkraftmaschinen der vorstehend genannten Art bekannt, zur Schadstoffminimierung Abgas in den Ansaugtrakt zurückzuführen. Die Steuerung der rückgeführten Abgasmenge erfolgt dabei üblicherweise in Abhängigkeit von den jeweiligen Betriebsparametern der Brennkraftmaschine über ein Abgasrückführventil. Dabei müssen die zum Einsatz kommenden Abgasrückführventile auch bei hohen Temperaturen betriebssicher arbeiten, weil sie direkt mit dem heißen Abgas beaufschlagt sind.

In Verbindung mit Abgasrückführventilen in Lastkraftwagen wurde bereits vorgeschlagen, Druckluft aus dem in solchen Fahrzeugen vorhandenen Druckluftbremssystem, das von einem im Nebentrieb der Brennkraftmaschine angeordneten Druckerzeuger gespeist wird, zu entnehmen und als Antriebsmedium für das Abgasrückführventil einzusetzen. Der damit verbundene Vorteil besteht einerseits darin, dass Druckluft als Antriebsmedium auch bei hohen Temperaturen betriebssicher ist, andererseits entfällt jeder Aufwand für die Drucklufterzeugung.

Will man die Abgasrückführung jedoch bei stationären Brennkraftmaschinen, bei Brennkraftmaschinen in Marinefaluzeugen, in Baumaschinen, in Pistenraupen usw. einsetzen, so ist dort ein Drucklufterzeuger in der Regel nicht vorhanden, es müsste also z. B. auf elektromotorische Betätigungseinrichtungen für das Abgasrückführventil zurückgegriffen werden. Deren Einsatz ist jedoch wegen der hohen Temperaturen problematisch.

In der JP 2004 011562 A wird vorgeschlagen, stromab eines Druckluftvorratsbehälter eine Verbindungsleitung zum Ansaugkrümmer vorzusehen. Diese ist jedoch nur zur Einspeisung von komprimierter Luft in den Ansaugkrümmer vorgesehen und nicht zur Speisung des Druckluftvorratsbehälters mit verdichteter Ladeluft.

Aus der JP 04 017765 A ist bekannt, von dem verdichteten Ladeluftstrom eine Druckluftentnahmeleitung abzuführen, die über ein kraftangetriebenes Steuerventil mit einem mittels Druckluft angetriebenen Abgasrückführventil verbunden ist. Es ist jedoch weder einen Druckluftvorratsbehälter noch ein Ladeluft Rückschlagventil beschrieben.

Ausgehend von diesem Stand der Technik ist es Aufgabe der Erfindung, zur Abgasrückführung bei aufgeladenen Brennkraftmaschinen eine Anordnung anzugeben, die, auch bei solchen Einsatzfällen, bei denen ein Druckluftsystem mit einem im Nebentrieb der Brennkraftmaschine angeordneten Drucklufterzeuger nicht zur Verfügung steht, eine Abgasrückführung mit einem druckluftbetätigten Abgasrückführventil ermöglicht.

Gelöst wird die Aufgabe durch die Kennzeichnenden Merkmale des Anspruches 1, Weiterbildungen sind in den abhängigen Ansprüchen gekennzeichnet.

Die Erfindung geht von der Überlegung aus, dass mit der Einrichtung für die Aufladung der Brennkraftmaschine eine Quelle für verdichtete Luft prinzipiell vorhanden ist, es wird deshalb vorgeschlagen, von dem verdichteten Ladeluftstrom mittels einer Druckluftentnahmeleitung verdichtete Luft abzweigen und über ein Ladeluft-Rückschlagventil in einen Druckluftvorratsbehälter zu führen. Der Ausgang des Druckluftvorratsbehälters ist mit dem Eingang eines die Druckluft schaltenden kraftangetriebenen Steuerventils verbunden, so dass dessen geschalteter Ausgang bei entsprechender Schaltstellung den Betätigungszylinder des Abgasrückflihrventils beaufschlagt und Schaltvorgänge des Abgasrückführventils auslöst. Dabei ist der Betätigungszylinder auf den vergleichsweise geringen Druck, den der Verdichter des Turboladers zu liefern vermag, ausgelegt.

Um eine Reduzierung des Luftdrucks im Vorratsbehälter durch Abkühlung der darin befindlichen Luft zu vermeiden, ist der Abzweig von dem Ladeluftstrom in den Druckluftvorratsbehälter vorteilhafter Weise nach dem Ladeluftkühler angeordnet, so dass bereits relativ kühle Luft in den Druckluftvorratsbehälter gelangt.

Zur Sicherstellung, dass die im Vorratsbehälter vorhandene Druckluft auch zur Durchführung der Schaltvorgänge des Abgasrückführventils ausreicht, ist es weiter von Vorteil, Schaltvorgänge erst bei einem vorgegebenen Druckniveau im Druckluftvorratsbehälter zuzulassen. Erfasst werden kann das Anliegen dieses Druckniveaus vorteilhaft auf indirektem Wege über einen Druckaufnehmer im Ladeluftrohr, der häufig bereits zur Steuerung anderer Vorgänge vorhanden ist. Eine weitere indirekte Möglichkeit das Vorhandensein eines ausreichenden Druckniveaus zu gewährleisten besteht darin, Schaltvorgänge erst ab einer vorgegebenen, empirisch ermittelten Motordrehzahl zuzulassen, bei der der Verdichter des Turboladers ein entsprechendes Druckniveau liefert.

Selbstverständlich besteht auch die Möglichkeit, direkt im Druckluftvorratsbehälter einen Drucksensor vorzusehen, um das Anliegen des für die Schaltvorgänge notwendigen Druckniveaus direkt zu ermitteln.

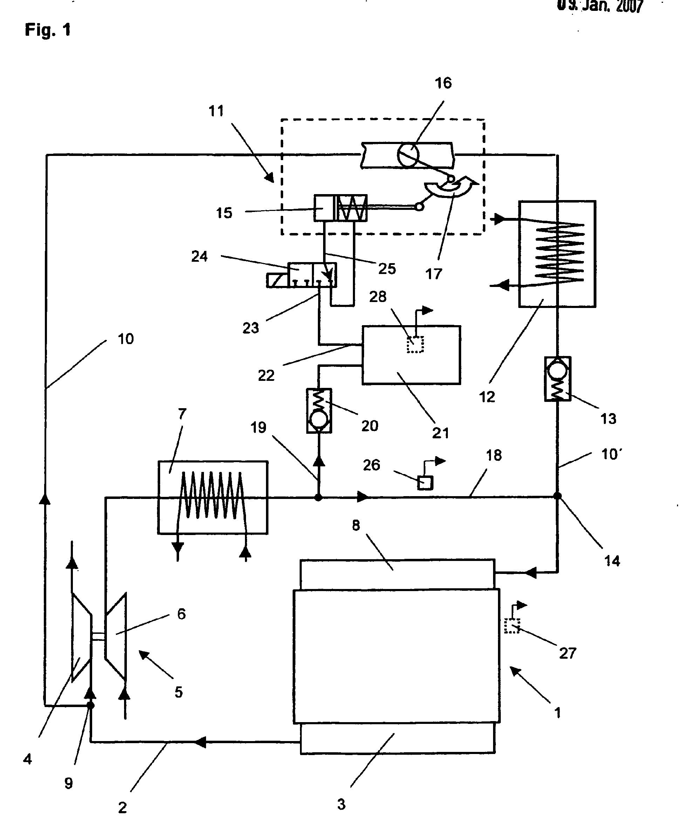

Ein Beispiel der erfindungsgemäßen Anordnung ist nachfolgend unter Zuhilfenahme der Zeichnungen näher erläutert, diese zeigt, mit Fig. 1 bezeichnet, eine schematische Darstellung einer mittels Abgasturbolader aufgeladenen Brennkraftmaschine mit Abgasrückführung.

Im dargestellten Beispiel beaufschlagt eine Brennkraftmaschine 1 mittels ihres Abgasstroms 2, der über das Abgassammelrohr 3 ausströmt, die Turbine 4 eines Abgasturboladers 5. Die Turbine 4 treibt ihrerseits über eine mechanische Verbindung den Verdichter 6 des Abgasturboladers 5, der über einen Luftfilter (nicht dargestellt) Frischluft ansaugt und verdichtet. Die verdichtete Luft gelangt, wie bei solchen Anordnungen üblich, über einen Ladeluftkühler 7 zum Ansaugkrümmer 8 der Brennkraftmaschine 1. Zur Schadstoffminimierung des Verbrennungsvorganges wird dem Abgasstrom an einem Punkt 9, der stromab zur Turbine 4 des Abgasturboladers liegt, Abgas entnommen und mittels einer Abgasrückführleitung 10, 10' auf die Saugseite der Brennkraftmaschine zurückgeführt. Dabei wird die zurückzuführende Abgasmenge mittels eines Abgasrückführventils 11, auf dessen Funktion später eingegangen wird, in Abhängigkeit von den Betriebsparametern der Brennkraftmaschine 1 geregelt. Das Abgas, das das Abgasrückführventil 11 passiert, gelangt über einen sogenannten AGR-Kühler 12, der das rückgeführte Abgas stark abkühlt, und ein Rückschlagventil 13, das auch als Flatterventil bezeichnet wird, am Zumischpunkt 14 in die verdichtete Ladeluft und von dort zusammen mit dieser zum Ansaugkrümmer 8 der Brennkraftmaschine 1.

Aufgabe des Rückschlagventils 13 ist es, bei geöffnetem Abgasrückführventil 11 Abgasdruckspitzen passieren zu lassen, ein überströmen der Ladeluft in den Abgastrakt dagegen zu verhindern, wenn der Druck der Ladeluft höher ist, als der Abgasdruck in der Abgasrückführleitung 10'.

Zur Steuerung der rückgeführten Abgasmenge wird, wie bereits erwähnt, einen Abgasrückführventil 11 eingesetzt, das abhängig von den Betriebsparametern der Brennkraftmaschine 1, Abgas durch die Abgasrückführleitung 10, 10' passieren lässt. Der Betätigungsmechanismus des Abgasrückführventils 11 besteht aus einem mit Druckluft beaufschlagten Betätigungszylinder 15, der über eine mechanische Wirkverbindung ein Sperrglied 16 in der Abgasrückführleitung 10 betätigt. Bei dem Sperrglied 16 kann es sich im einfachsten Fall um eine Abgasklappe in der Abgasrückführleitung 10 handeln, die mittels des Betätigungszylinders 15 über ein mechanisches Gestänge entlang des Pfeile 17 verschwenkbar ist und so, je nach Beaufschlagung des Betätigungszylinders 15, die Abgasrückführleitung 10 öffnet oder schließt. Um zu vermeiden, dass der AGR-Kühler 12 ständig mit heißem Abgas beaufschlagt wird, kann das Abgasrückführventil 11 vor dem AGR-Kühler 12 angeordnet sein, wie dies im Beispiel der Fall ist. Diese Anordnung bedingt, dass, durch die relativ hohen Temperaturen an dieser Stelle der Abgasrückführleitung 10, für den Antrieb des Abgasrückführventils 11 ein mit Druckluft beaufschlagter Zylinder weit betriebssicherer ist, als z.B. ein elektrischer oder ein hydraulischer Antrieb.

Um den nötigen Betriebsdruck für die Beaufschlagung des Betätigungszylinders 15 zu erzeugen, ist eine Druckluftentnahmeleitung 19 vorgesehen, welche von dem die verdichteten Ladeluft führenden Ladeluftrohr 18 abzweigt und über ein Ladeluft-Rückschlagventil 20 zu einem Druckluftvorratsbehälter 21 führt. Der Ausgang 22 des Druckluftvorratsbehälters 21 ist mit dem Eingang 23 des Steuerventils 24, das als Magnetventil ausgeführt ist, verbunden, dessen geschalteter Ausgang 25 wiederum dem Betätigungszylinder 15 beaufschlagt. Der Abzweig der Druckluftentnahmeleitung 19 liegt dabei stromab zum Ladeluftkühler 7, weil die von dort in den Druckluftvorratsbehälter 21 abgeführte Druckluft bereits abgekühlt ist, wodurch ein Druckverlust durch Abkühlen im Druckluftvorratsbehälter weitgehend vermieden wird.

Im Betrieb der Brennkraftmaschine 1 baut sich im Druckluftvorratsbehälter 21 schon nach kurzer Betriebsdauer ein Druck in Höhe des Ladedrucks auf, der bei entsprechender Schaltstellung des Steuerventils 24 am Betätigungszylinder 15 des Abgasrückführventils 11 anliegt. Wird also das Steuerventil 24 über die Motorsteuereinheit (nicht dargestellt) von seiner "Sperrstellung" in "Durchgangsstellung" geschaltet, gelangt die aus dem Druckluftvorratsbehälter 21 ausströmende Druckluft in den Betätigungszylinder 15 des Abgasrückführventils 11 und beaufschlagt diesen so, dass das Sperrglied 16 öffnet, wodurch Abgas in den Ansaugkrümmer 8 der Brennkraftmaschine 1 rückgeführt wird.

Um sicherzustellen, dass die im Druckluft-Vorratsbehälter 21 vorhandene Druckluft auch zur Durchführung der Schaltvorgänge des Abgasrückführventils 11 ausreicht, ist vorgesehen, Schaltvorgänge erst bei einem vorgegebenen Druckniveau im Druckluftvorratsbehälter 21 zuzulassen. Um das Erreichen dieses Druckniveaus zu ermitteln bieten sieh mehrere Wege an, die in Verbindung mit dem vorstehend beschriebenen Beispiel alternativ zur Anwendung kommen können.

In einer ersten Lösung kann der Druck im Ladeluftrohr mittels eines Ladedrucksensors 26 von der Motorsteuereinheit ausgewertet werden. Bei zu geringem Ladedruck würde nicht genügend Druckluft nachgeliefert, so dass Schaltvorgänge des Abgasrückführventils 11 unterhalb eines vorgegebenen Druckniveaus im Ladeluftrohr 18 zu unterdrücken sind. Diese Vorgehensweise ist dann günstig, wenn ein Ladedrucksensor 26 im Ladeluftrohr 18 ohnehin zur Steuerung anderer Vorgänge bereits vorhanden ist.

Eine weitere indirekte Möglichkeit, das Vorhandensein eines ausreichenden Druckniveaus im Druckluftvorratsbehälter 21 sicherzustellen besteht darin, Schaltvorgänge erst ab einer vorgegebenen, empirisch ermittelten Motordrehzahl zuzulassen, bei der der Verdichter 6 des Turboladers 5 ein entsprechendes Druckniveau liefert. Die Drehzahl wird von einem ohnehin bei Brennkraftmaschinen der in Rede stehenden Art vorhandenen Drehzahlsensor 27 erfasst und von einer ebenfalls vorhandenen Motorsteuereinheit (nicht dargestellt) ausgewertet, so dass kein zusätzlicher Aufwand notwendig ist.

Selbstverständlich besteht auch die Möglichkeit, direkt im Druckluftvorratsbehälter 21 einen Drucksensor 28 vorzusehen um ein für die Schaltvorgänge notwendiges Druckniveau sicherzustellen.

Der Vorteil der vorstehend beschriebenen erfindungsgemäßen Anordnung besteht in erster Linie darin, dass einerseits als Antriebsmedium für das Abgasrückführventil 11 Druckluft eingesetzt werden kann, was die Betriebssicherheit insbesondere bei auf der heißen Seite der Brennkraftmaschine angeordnetem Abgasrückführventil entscheidend verbessert. Andererseits wird durch die Nutzung der verdichteten Ladeluft als Antriebsmedium für das Abgasrückführventil der Einsatz einer zusätzlichen Druckluft erzeugenden Einrichtung entbehrlich, so dass auch bei solchen Anwendungen, bei denen eine Druckluftanlage mit eigenem Druckerzeuger nicht vorhanden ist, wie z. B. bei stationär betriebenen Brennkraftmaschinen, bei Brennkraftmaschinen in Baumaschinen, in Wasserfahrzeugen, in Pistenraupen usw., ein mittels Druckluft betätigtes Abgasrückführventil bei minimalem Aufwand realisiert werden kann.

Selbstverständlich lässt sich die vorstehend in Verbindung mit einer einstufigen Aufladung beschriebene erfindungsgemäße Anordnung auch in Verbindung mit einer mehrstufigen Aufladung oder einer Registeraufladung realisieren.

## Patentansprüche

1. Anordnung zur Abgasrückführung bei mittels Abgasturbolader aufgeladenen Brennkraftmaschinen, wobei
- der von der Brennkraftmaschine (1) kommende Abgasstrom (2) die Turbine (4) des Abgasturboladers (5) antreibt,
- der Verdichter (6) des Abgasturboladers (5) die der Brennkraftmaschine (1) zuzuführende Frischluft verdichtet,
- vor der Turbine (5) von dem Abgasstrom (2) eine Abgasrückführleitung (10) abzweigt, in der wenigstens ein Abgasrückführkühler (12) für das rückzuführende Abgas und wenigstens ein mittels Druckluft angetriebenes, die rückzuführende Abgasmenge regelndes Abgasrückführventil (11) angeordnet sind,
- die von dem Verdichter (6) verdichtete Frischluft über wenigstens einen Ladeluftkühler (7) dem Ansaugkrümmer (8) der Brennkraftmaschine zugeführt wird,
- die vom Abgasrückführventil (11) kommende Abgasrückführleitung (10') nach dem Ladeluftkühler (7) in den Ladeluftstrom einmündet,
**dadurch gekennzeichnet, dass**
- von dem verdichteten Ladeluftstrom eine Druckluftentnahmeleitung (19) abzweigt die über ein Ladeluft-Rückschlagventil (20) in einen Druckluftvorratsbehälter (21) führt,
- der Ausgang (22) des Druckluftvorratsbehälters (21) mit dem Eingang (23) eines die Druckluft schaltenden, kraftangetriebenen Steuerventils (24) verbunden ist,
- der geschaltete Ausgang (25) des kraftangetriebenen Steuerventils (24) das mittels Druckluft angetriebene Abgasrückführventil (11) beaufschlagt.

2. Anordnung nach Anspruch 1, **dadurch gekennzeichnet, dass** der Punkt an dem die Druckluftentnahmeleitung (19) von dem den Ladeluftstrom führenden Ladeluftrohr 18 abzweigt, zwischen dem Ladeluftkühler (7) und der Einmündung der Abgasrückführleitung (10') in den Ladeluftstrom liegt.

3. Anordnung nach einem der vorhergehenden Ansprüche, **dadurch gekennzeichnet, dass** ein Sensor vorgesehen ist, mit dessen Hilfe eine Motorsteuereinheit das Anliegen eines vorgegebenen Druckniveaus im Druckluftvorratsbehälter 21 direkt oder indirekt ermittelt.

4. Anordnung nach Anspruch 3, **dadurch gekennzeichnet, dass** der Sensor ein im Ladeluftrohr angeordneter Ladedrucksensor (26) ist.

5. Anordnung nach Anspruch 3, **dadurch gekennzeichnet, dass** der Sensor ein die Motordrehzahl der Brennkraftmaschine 1 abtastender Drehzahlsensor (27) ist.

6. Anordnung nach Anspruch 3, **dadurch gekennzeichnet, dass** der Sensor ein im Druckluftvorratsbehälter 21 angeordneter Drucksensor (28) ist.

## Claims

1. An arrangement for exhaust recirculation in internal combustion engines which are supercharged by means of exhaust turbochargers, wherein
- the exhaust stream (2) coming from the internal combustion engine (1) drives the turbine (4) of the exhaust turbocharger (5),
- the compressor (6) of the exhaust turbocharger (5) compresses the fresh air to be supplied to the internal combustion engine (1),
- before the turbine (5) an exhaust gas recirculation line (10) branches off from the exhaust stream (2), in which line at least one exhaust gas recirculation cooler (12) for the exhaust which is to be recirculated and at least one exhaust gas recirculation valve (11) driven by means of compressed air which regulates the amount of exhaust to be recirculated are arranged,
- the fresh air compressed by the compressor (6) is supplied via at least one charge-air cooler (7) to the intake manifold (8) of the internal combustion engine,
- the exhaust gas recirculation line (10') coming from the exhaust gas recirculation valve (11) opens into the charge-air stream after the charge-air cooler (7),
**characterised in that**
- a compressed-air removal line (19) branches off from the compressed charge-air stream, which line leads via a charge-air non-return valve (20) into a compressed-air storage vessel (21),
- the outlet (22) of the compressed-air storage vessel (21) is connected to the inlet (23) of a power-driven control valve (24) which switches the compressed air,
- the switched outlet (25) of the power-driven control valve (24) acts on the exhaust gas recirculation valve (11) which is driven by means of compressed air.

2. An arrangement according to Claim 1, **characterised in that** the point at which the compressed-air removal line (19) branches off from the charge-air tube (18) carrying the charge-air stream lies between the charge-air cooler (7) and the point at which the exhaust gas recirculation line (10') opens into the charge-air stream.

3. An arrangement according to one of the preceding claims, **characterised in that** a sensor is provided, with the aid of which an engine control unit directly or indirectly establishes the presence of a pre-set pressure level in the compressed-air storage vessel (21).

4. An arrangement according to Claim 3, **characterised in that** the sensor is a boost-pressure sensor (26) arranged in the charge-air tube.

5. An arrangement according to Claim 3, **characterised in that** the sensor is a speed sensor (27) which senses the engine speed of the internal combustion engine 1.

6. An arrangement according to Claim 3, **characterised in that** the sensor is a pressure sensor (28) arranged in the compressed-air storage vessel (21).

## Revendications

1. Dispositif de recyclage des gaz d'échappement d'un moteur à combustion interne suralimenté par un turbocompresseur de gaz d'échappement dans lequel
- la veine de gaz d'échappement (2) sortant du moteur à combustion interne (1) entraîne la turbine (4) du turbocompresseur de gaz d'échappement (5),
- le compresseur (6) du turbocompresseur de gaz d'échappement (5) comprime l'air frais alimentant le moteur à combustion interne (1),
- en amont de la turbine (5), une conduite de recyclage des gaz d'échappement (10) dérivant de la veine des gaz d'échappement (2) et comportant au moins un radiateur des gaz d'échappement (12) pour les gaz d'échappement à recycler et au moins une soupape de recyclage des gaz d'échappement (11) actionnée par de l'air comprimé et régulant la quantité de gaz d'échappement à recycler,
- l'air frais comprimé par le compresseur (6) alimente le moteur à combustion interne en traversant au moins un radiateur d'air d'alimentation (7) avant d'arriver dans le collecteur d'admission (8),
- la conduite de recyclage de gaz d'échappement (10') en aval de la soupape de recyclage de gaz d'échappement (11) débouche en aval du radiateur d'air d'alimentation (7) dans la veine d'air d'alimentation,
dispositif **caractérisé en ce que**
- une conduite de prélèvement d'air comprimé (19) dérive de la veine d'air d'alimentation, comprimé, cette conduite arrivant à travers un clapet anti-retour d'air d'alimentation (20) dans un réservoir d'air comprimé (21),
- la sortie (22) du réservoir d'alimentation en air comprimé (21) est reliée à l'entrée (23) d'une soupape de commande (24) motorisée, commutant l'air comprimé,
- la sortie commutée (25) de la soupape de commande (24) motorisée, sollicite avec de l'air comprimé la soupape (11), entraînée, de recyclage des gaz d'échappement.

2. Dispositif selon la revendication 1,
**caractérisé en ce que**
le point où la conduite de prélèvement d'air comprimé (19) dérive de la conduite d'alimentation en air (18) pour la veine d'air d'alimentation se situe entre le radiateur d'air d'alimentation (7) et l'embouchure de la conduite de recyclage des gaz d'échappement (10') dans la veine d'air d'alimentation.

3. Dispositif selon l'une des revendications précédentes,
**caractérisé par**
un capteur qui détermine directement ou indirectement à l'aide d'une unité de commande de moteur, l'établissement d'un niveau de pression prédéterminé dans le réservoir d'alimentation en air comprimé (21).

4. Dispositif selon la revendication 3,
**caractérisé en ce que**
le capteur est un capteur de pression d'alimentation (26) installé dans la conduite d'alimentation en air.

5. Dispositif selon la revendication 3,
**caractérisé en ce que**
le capteur est un capteur de vitesse de rotation (27) détectant la vitesse de rotation (régime) du moteur à combustion interne (1).

6. Dispositif selon la revendication 3,
**caractérisé en ce que**
le capteur est un capteur de pression (28) installé dans le réservoir d'alimentation en air comprimé (21).
